# EUROPEAN PATENT APPLICATION

(11) **EP 2 541 553 A2**
(43) Date of publication of application: **02.01.2013**
(21) Application number: 12173805.8
(22) Date of filing: 27.06.2012
(51) Int. Cl.: G11B 27/34, G06F 3/033, G06F 3/048

(54) **Parameter controlling apparatus**

(30) Priority: 27.06.2011 JP 2011141420
(71) Applicant: YAMAHA CORPORATION, Hamamatsu-shi Shizuoka-ken 430-8650 (JP)
(72) Inventor: Kamihara, Masanori, Shizuoka-ken, 430-8650 (JP); Kitayama, Toru, Shizuoka-ken, 430-8650 (JP); Esashi, Masato, Shizuoka-ken, 430-8650 (JP)
(74) Representative: HOFFMANN EITLE

(57) **Abstract**

By user's pinching operation on a slider 2e of a controller 2, it is judged that the slider 2e has been operated on two points, so that a DAW screen is zoomed in or out in accordance with the speed at which the distance between the two points has changed and the amount by which the distance between the two points has changed. By user's sliding operation on the slider 2e of the controller 2, it is judged that the slider 2e has been operated on one point, so that the function of the DAW is controlled in accordance with the speed at which the slider 2e has moved and the amount by which the slider 2e has moved.

## Description

### BACKGROUND OF THE INVENTION

### Field of the Invention

The present invention relates to a parameter controlling apparatus for controlling parameters on sound signal processing.

### Description of the Related Art

Conventionally, it is known that a user performs various sound processing such as recording, editing and mixing of performance data on a sound signal processing apparatus which uses a computer. The computer used by the sound signal processing apparatus is a general-purpose computer such as a PC (personal computer), and has various kinds of hardware devices such as an audio interface and MIDI (musical instrument digital interface) necessary for the sound signal processing apparatus. Into the computer, an application program for enabling the computer to perform sound signal processing capabilities is integrated. By this application program, the computer is able to perform the sound signal processing capabilities such as recording and reproducing sound signals, adding effects, and mixing. Such a sound signal processing apparatus is referred to as a digital audio workstation (DAW). Hereafter, the application program which enables the computer to perform the DAW capability will be referred to as "DAW software".

Creating music on a PC is commonly done. More specifically, by installing DAW software on the PC, a user can input MIDI data on the DAW, and cut and paste audio data to create a song. Creating music in this way requires complicated operation on a mouse and a keyboard of the PC, for the user is required to perform elaborate operation such as specifying appropriate timing at which musical waveforms should be cut and pasted.

In order to solve the above-described difficulty, conventionally, a controller specifically designed for operating the DAW can be connected to the PC on which DAW software has been installed to allow the user to remote-control the DAW by using knobs, a slider, buttons and the like of the controller. (see Steinberg Media Technologies GmbH CC121 operation manual, p. 15 to 19, [online], [searched on May 23, 2011], Internet <ftp://ftp.steinberg.net/Download/Hardware/CC121/CC121_OperationMannu al_ja.pdf>

### SUMMARY OF THE INVENTION

For editing song data by use of the DAW, the user moves a location bar to an editing position to edit song data while looking at a screen of the DAW displayed on the PC. The location bar indicates the current reproduction position of song data, also serving as a cursor for indicating an editing position. By zooming out tracks displayed on the screen in the lateral direction (in the direction of time axis) before moving the location bar, the user can look the entire song at a glance, so that the user can efficiently move the location bar to a position to which the user wishes to move the location bar. By zooming in waveforms of a position which the user wishes to edit before editing audio data on the DAW, on the other hand, the user can recognize amplitude and timing to appropriately edit data. During editing of song data, therefore, it is necessary for the user to repeatedly zoom in and out the screen such as moving the location bar to an editing position in a state where the screen is zoomed out, then zooming in the screen to edit waveforms, and then zooming out the screen again to move the location bar to the next editing position.

However, addition of operating elements for zooming in/out the screen to the controller originally designed for controlling musical capabilities of the DAW will result in degraded operability of the controller due to a difficulty in finding a necessary operating element caused by the added operating elements and a difficulty in operating the controller caused by the downsized operating elements. In order to avoid these difficulties, therefore, a conventional small controller requires a user to use both the controller and the mouse (or the keyboard) alternately. More specifically, the user is required to edit data and control the reproduction of a song by use of the controller but to zoom in/out the screen by use of the mouse or a keyboard shortcut of the PC.

An object of the present invention is to provide a parameter controlling apparatus, a parameter controlling method and a parameter controlling program which enable zoom-in/out of a screen by user's simple operation during editing of song data without the need for operating elements for zooming in/out a screen so that the user can efficiently edit the song data. As for descriptions for respective constituents of the present invention described below, numbers corresponding to components of a later-described embodiment are given in parenthesis for easy understanding. However, the respective constituents of the present invention are not limited to the corresponding components indicated by the numbers of the embodiment.

In order to achieve the above-described object, it is a feature of the present invention to provide a parameter controlling apparatus having an operating portion (2a) adapted to control a reproduction state of song data displayed on a display portion (1, 30) for displaying a track into which the song data has been input, the parameter controlling apparatus including judging means (S10) for judging whether the operating portion has been operated in a first manner or in a second manner; first instructing means (S14 to S16) for generating, when it is judged by the judging means that the operating portion has been operated in the first manner, an instruction to change a parameter which is to be controlled and relates to reproduction of the song data in accordance with the operation of the operating portion; and second instructing means (S11, S12) for generating, when it is judged by the judging means that the operating portion has been operated in the second manner, an instruction to zoom in or out and display the track displayed on the display portion.

In this case, the song data is at least one of musical performance data and musical waveform data, for example. Furthermore, the operation in the first manner is sliding operation. The first instructing means may generate an instruction relating to a direction in which the parameter changes and an amount by which the parameter changes in accordance with a direction in which the sliding operation is performed and an amount by which the sliding operation is performed. The first instructing means may further generate an instruction relating to speed at which the parameter changes in accordance with a speed at which the sliding operation is performed.

On the display portion, a reproduction position of the song data may be also displayed; the reproduction position of the song data may be controlled by the operation of the operating portion in the first manner; and the first instructing means may generate an instruction to change the parameter relating to the reproduction position of the song data in accordance with the operation of the operating portion. A direction in which the song data is reproduced and a speed at which the song data is reproduced may be controlled by the operation of the operating portion in the first manner; and the first instructing means may generate an instruction to change the parameter relating to the direction in which the song data is reproduced and the speed at which the song data is reproduced in accordance with the operation of the operating portion. Scrolling on the display portion may be controlled by the operation of the operating portion in the first manner; and the first instructing means may generate an instruction to change the parameter relating to the scrolling on the display portion in accordance with the operation of the operating portion.

Furthermore, the parameter controlling apparatus may further include a mode switch (2c) for setting, as items to be controlled by the operation of the operating portion in the first manner, at least two of reproduction position of the song data, quick reproduction of the song data, slow reproduction of the song data and scrolling on the display portion; and target operation item determining means (S13, S18) for determining, when the mode switch and the operating portion are touched at the same time, a target item which is to be controlled by the operation of the operating portion in the first manner in accordance with a touched position of the operating portion, wherein the first instructing means may generate an instruction to change, in accordance with the operation of the operating portion in the first manner, the determined parameter which is to be controlled.

Furthermore, the operation in the second manner is pinching operation, for example. Furthermore, the second instructing means may generate an instruction relating to zoom in or out of the track displayed on the display portion in accordance with a direction in which the pinching operation is performed on the operating portion, a speed at which the pinching operation is performed on the operating portion, and an amount by which the pinching operation is performed on the operating portion.

According to the present invention, an instruction to change the parameter which is to be controlled and relates to reproduction of a song is generated by the operation of the operating portion in the first manner, while an instruction to zoom in or out and display the track displayed on the display means is generated by the operation of the operating portion in the second manner. Therefore, the present invention enables a user to efficiently zoom in/out the screen and control the reproduction of song data during editing of the song data. In this case, the present invention enables the zoom in/out of the screen without the need for operating elements provided specifically for zoom. The present invention which does not require such operating elements provided specifically for zoom avoids complicated operability, and can make the apparatus having operating elements compact. Furthermore, the present invention does not require the user to move the user's hand and the user's line of vision at transition between zooming and different operation, facilitating user's editing.

In addition, when implementing the present invention, the invention is not limited to the invention of the parameter controlling apparatus, but can be implemented as inventions of a parameter controlling method and a computer program for parameter control.

### BRIEF DESCRIPTION OF THE DRAWINGS

FIG. 1 is a diagram indicative of a configuration of a system in which a controller according to an embodiment of the present invention is connected to a PC;
FIG. 2 is a block diagram of a hardware configuration of the controller of the embodiment of the invention;
FIG. 3 is a diagram indicative of a configuration of a panel of the controller according to the embodiment of the present invention;
FIG. 4 is a diagram provided in order to explain the first operating manner of a slider of the controller of the present invention;
FIG. 5 is a diagram provided in order to explain the second operating manner of the slider of the controller of the present invention;
FIG. 6 is a flowchart of a slider operation process carried out on the controller of the present invention;
FIG. 7 is a diagram indicative of a configuration for switching a function assigned to the slider of the controller of the invention; and
FIG. 8 is a flowchart indicative of operation of inputting markers which is the embodiment of the controller of the invention.

### DESCRIPTION OF THE PREFERRED EMBODIMENT

The parameter controlling method of the present invention is carried out by a controller according to the embodiment of the present invention. Hereafter, the controller (the parameter controlling apparatus) according to the embodiment of the invention which carries out the parameter controlling method of the invention will be explained.

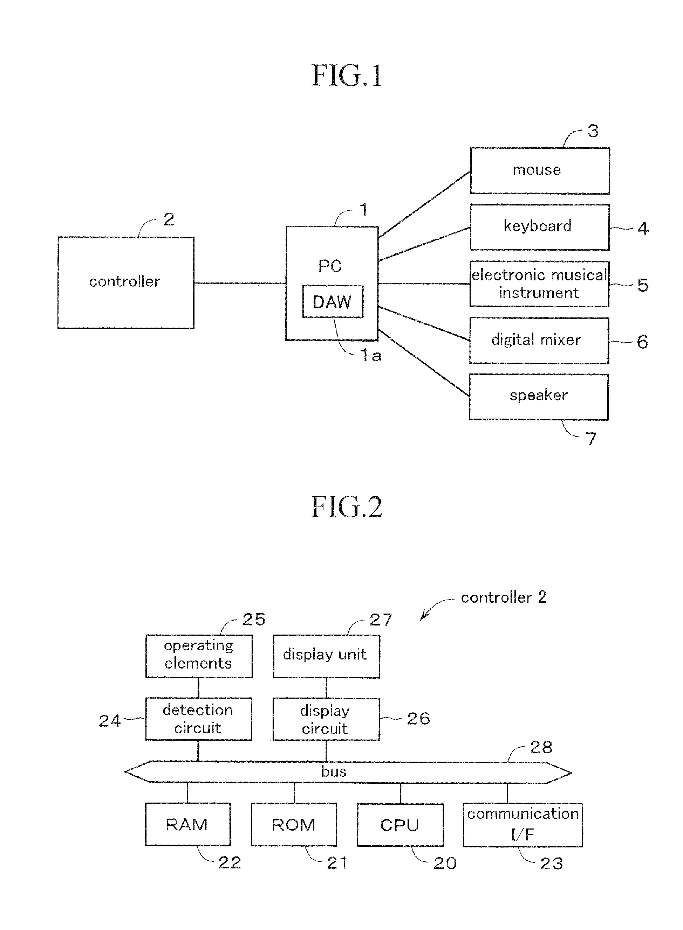

FIG. 1 indicates a configuration of a system in which the controller according to the embodiment of the invention is connected to a PC (personal computer).

In the system indicated in FIG. 1, DAW 1a which is application software referred to as DAW (digital audio workstation) for editing song data to create music and achieving various sound processing capabilities such as effect-adding and mixing is installed on a PC 1. The PC 1 is a general-purpose personal computer which starts the DAW 1a. By starting the DAW 1 a on the PC 1, the PC 1 can record and reproduce sound signals, and can realize various sound signal processing capabilities such as creating music. A mouse 3 which is a pointing device for operating the PC 1, a keyboard 4 which is an input device for performing various manipulations on the PC 1 such as inputting of characters, an electronic musical instrument 5, a digital mixer 6 and a speaker 7 are connected to the PC 1. In this system, sound signals supplied from the electronic musical instrument 5 or the digital mixer 6 can be input to the DAW 1 a, while sound signals output from the DAW 1 a can be supplied to the speaker 7. By operating the mouse 3 and the keyboard 4 connected to the PC 1, a user can operate applications such as the DAW 1a. In addition, a controller 2 according to the present invention which is designed specifically for the DAW in order to operate the DAW 1 a is connected to the PC 1. The controller 2 is USB (universal serial bus) connected to the PC 1, for example.

FIG. 2 indicates a block diagram of a hardware configuration of the controller 2 of the embodiment of the present invention.

As indicated in FIG. 2, a CPU (central processing unit) 20 of the controller 2 carries out a management program (OS: operating system) to control the entire operation of the controller 2 on the OS. The controller 2 has a non-volatile ROM (read-only memory) 21 which stores an operating program for the controller 2 and various kinds of data, and a RAM (random-access memory) 22 which serves as a working area for the CPU 20 and stores various kinds of data. A communication I/F 23, which is a communication interface for connecting the controller 2 to the PC 1, is an interface such as USB or Ethernet (trademark). Through the communication I/F 23, signals corresponding to user's operation performed on the controller 2 are transmitted to the PC 1, while the controller 2 receives signals corresponding to a state of the operating DAW 1a from the PC 1.

Operating elements 25 are a plurality of switches and a slider provided on a panel of the controller 2, and are associated with functions of the DAW, respectively. A detection circuit 24 is a detection circuit which scans the operating elements 25 and detects a user's operated operating element and the manner in which the operating element has been operated. In accordance with the detected user's operation of the operating element, an instruction to perform a user's intended function of the DAW 1 a is output through the communication I/F 23. A display unit 27 is LEDs provided inside the respective operating elements. A display circuit 26 controls respective LEDs which serve as the display unit 27 so that the respective LEDs will turn on/off or blink in accordance with user's operation of the operating elements or signals received from the DAW. The respective components are connected to a bus 28.

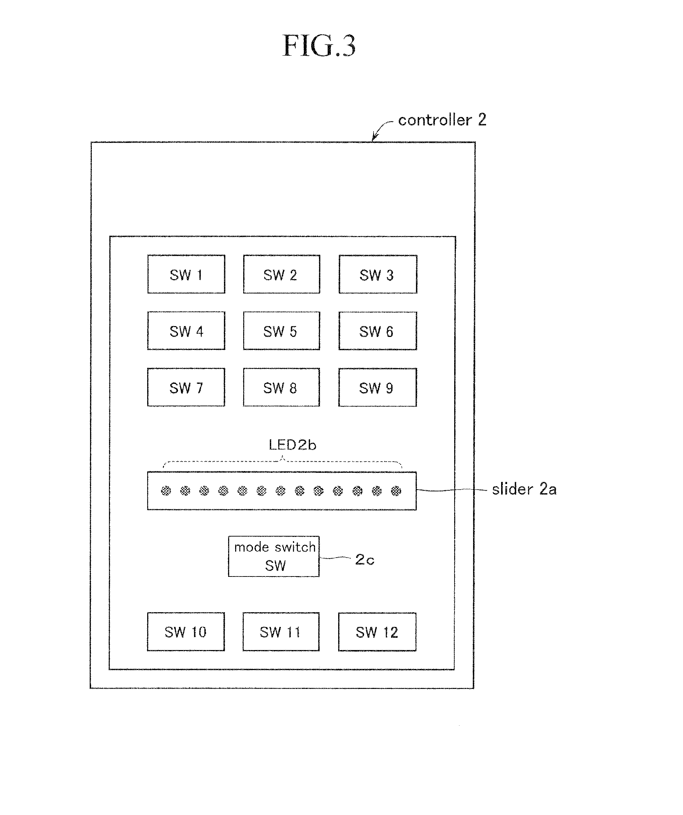

Next, a configuration of the panel of the controller 2 according to the embodiment of the present invention is indicated in FIG. 3.

As indicated in FIG. 3, the controller 2 is a small controller sized such that a user can hold the controller 2 with the user's one hand to operate the controller with the other hand. On the panel of the controller 2, the various operating elements 25 are provided. More specifically, nine switches SW1 to SW9 arranged in three rows and three columns from the top to the middle part of the panel and three switches SW10 to SW12 arranged in one row at the lower part of the panel are switches for reproduction control such as start/stop of reproduction, fast forward, fast reverse, on/off of loop-reproduction, and on/off of recording and for editing such as creating a new track and inserting data. The switches SW1 to SW12 have LEDs, respectively, so that the respective LEDs will turn on/off in accordance with respective operated states of the switches SW1 to SW12 or the state of the DAW 1 a.

Below the switches SW7 to SW9, a slider 2a formed of a touch pad which is a long rectangle extending in a lateral direction is provided. To the slider 2a, one of functions such as the control of reproduction position or the control of reproduction speed can be assigned. In a case where the function of controlling reproduction position is assigned to the slider 2a, for example, a location bar provided on the DAW 1a moves in accordance with user's operation of the slider 2a. In addition, the slider 2a is designed to perform different processing depending on the manner in which the user operates the slider 2a. In addition to the above-described controls such as the control of reproduction position and the control of reproduction speed, more specifically, the slider 2a is used for control of zoom in/out of a DAW screen displayed on the PC 1. The slider 2a has a plurality of LEDs 2b arranged in one row in the lateral direction. The position of illuminating LED 2b varies depending on the function assigned to the slider 2a and the operated state of the DAW 1 a.

Below the slider 2a, furthermore, a mode switch SW2c for switching the function which the slider 2a is to perform is provided. By operating the slider 2a while depressing the mode switch SW2c, the user can switch the function which is to be performed when the user operates the slider 2a. The mode switch SW2c has an LED which keeps lighting while the mode switch SW2c is being depressed.

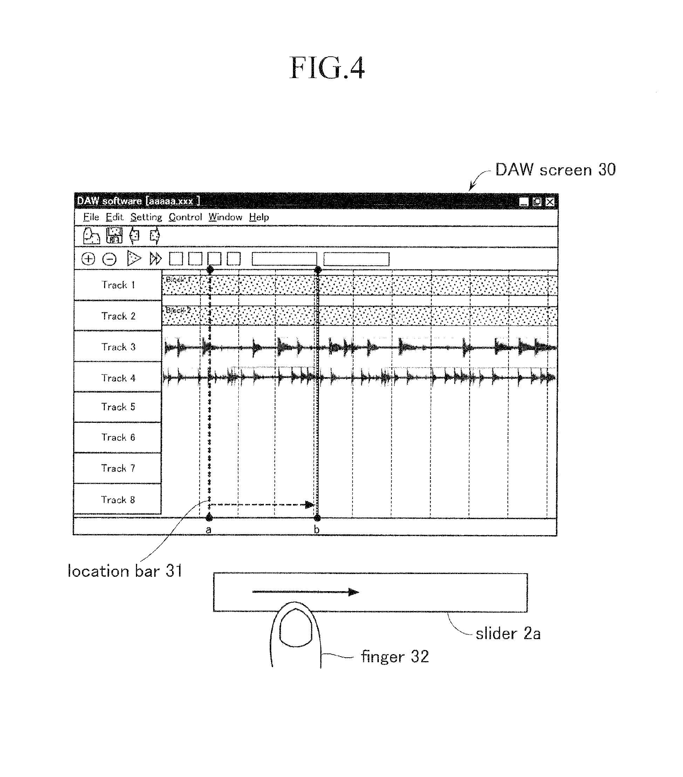

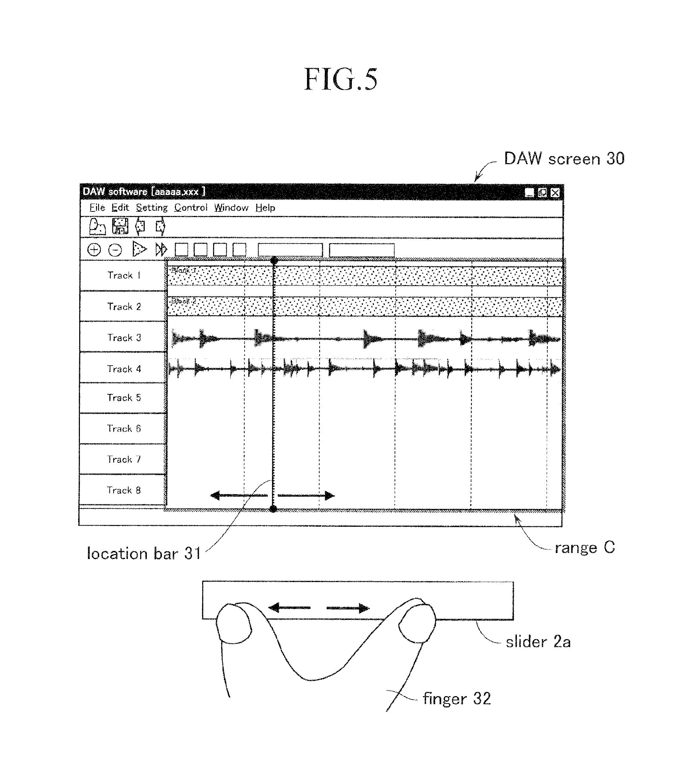

The slider 2a of the controller 2 has two operating manners: the first operating manner which is the sliding operation in which the user slides the slider 2a in the lateral direction with a user's finger, and the second operating manner which is the pinching operation in which the user opens or closes user's two fingers on the slider 2a. An example of the first manner is indicated in FIG. 4, while an example of the second manner is indicated in FIG. 5.

FIG. 4 and FIG. 5 indicate a DAW screen 30 displayed on the PC 1 when the DAW software is started on the PC 1. The DAW screen 30 has an area for displaying song data of a song. On this display area, musical performance data and musical waveforms of a plurality of tracks (Track 1, Track 2, Track 3, Track 4...) are displayed. In general, a set of song data is formed of a plurality of parts such as a melody part and an accompaniment part, while each part has one or more tracks. Track 1 and Track 2 are tracks for musical performance data such as MIDI, while Track 3 and Track 4 are tracks for musical waveforms such as vocal. On the display area of the tracks, a location bar 31 which indicates a reproduction position is displayed. When a reproduction button is depressed, the respective tracks are reproduced starting at the position of the location bar 31. As the reproduction of the song progresses, the location bar 31 moves to the right in accordance with the currently reproduced position. In the display area of the tracks, in addition, vertical broken lines are provided to indicate positions of measures or beats.

In the first operating manner indicated in FIG. 4, in a case where the slider 2a is assigned a locating function of moving the location bar 31 indicative of the reproduction position, the user operates the slider 2a by the sliding operation in which the slider 2a is slid in the lateral direction with a user's finger 32. In this case, the location bar 31 (reproduction position) moves in accordance with the user's sliding operation. By user's sliding operation in which the slider 2a is slid with the finger 32 from the left to the right, for example, an instruction to move the location bar 31 (reproduction position) situated at position "a" to position "b" which is located on the right side of the position "a" is transmitted to the PC 1 through the communication I/F 23 of the controller 2. As a result, the location bar 31 (reproduction position) which has moved to the position "b" is displayed.

By user's sliding operation in which the slider 2a is slid with the finger 32 from the right to the left, an instruction to move the location bar 31 (reproduction position) to the left is transmitted to the PC 1 through the communication I/F 23 of the controller 2. As a result, the location bar 31 (reproduction position) which has moved from the current position to the left is to be displayed. As described above, the direction in which the location bar 31 moves varies according to the direction in which the finger 32 moves. According to the speed and the amount by which the finger 32 moves, furthermore, the speed and the amount by which the location bar 31 moves vary. In a case where the slider 2a is assigned a different function, processing corresponding to the assigned function is performed by user's sliding operation on the slider 2a with the finger 32.

The second operating manner indicated in FIG. 5 is a case in which the user performs the pinching operation on the slider 2a with the user's two fingers 32. In this case, by opening (widening) the two fingers 32 as indicated in the figure, an instruction to enlarge, in the lateral direction, musical performance data and musical waveforms of the tracks displayed in an area of range C included in the screen as shown by arrows in the figure is transmitted to the PC 1 through the communication I/F 23 of the controller 2. By this instruction, with the position of the location bar 31 being centered, the time axis in the lateral direction shown in the range C of the DAW screen 30 is zoomed in to widen the space between the broken lines indicative of beat positions as shown in the figure to display details of the musical waveforms. According to the speed and the amount by which the fingers 32 have moved, furthermore, the speed and the rate of the zoom vary.

By closing (narrowing) the two fingers 32, in addition, an instruction to zoom out, in the lateral direction, the musical performance data and the musical waveforms of the tracks shown in the range C on the screen is transmitted to the PC 1 through the communication I/F 23 of the controller 2. By this instruction, with the position of the location bar 31 being centered, the time axis in the lateral direction shown in the range C of the DAW screen 30 is zoomed out. Irrespective of the function currently assigned to the slider 2a and of whether the mode switch SW2c has been operated or not, user's operation of the slider 2a in the second manner results in zooming in or out on the screen in accordance with the user's pinching operation.

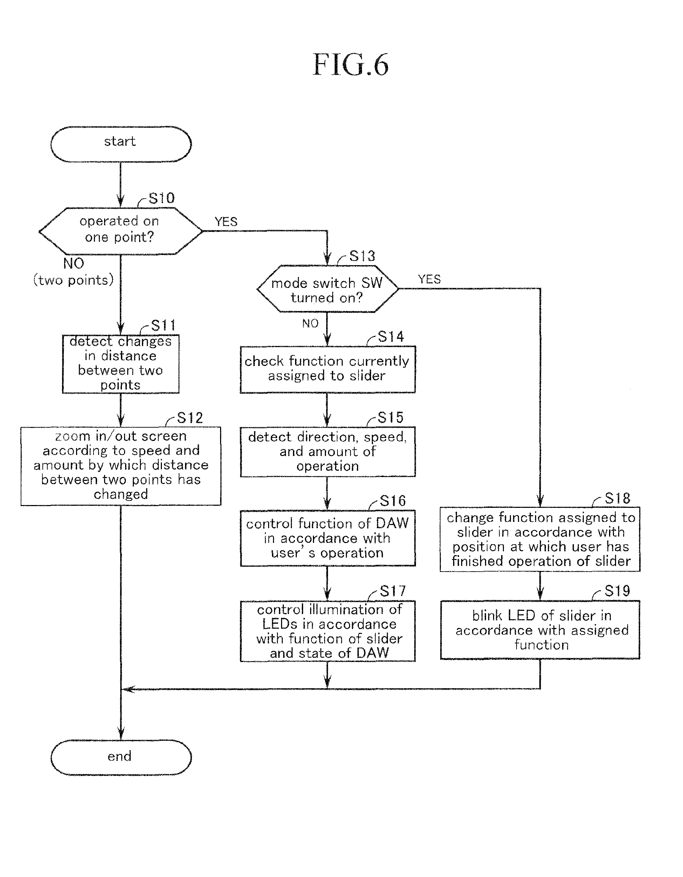

FIG. 6 is a flowchart of a slider operation process carried out on the controller 2 when the slider 2a of the controller 2 of the present invention is operated.

When the detection circuit 24 detects user's operation of the slider 2a, the slider operation process indicated in FIG. 6 starts. In step S10, it is judged whether the user has made the operation of the slider 2a on one point or two points of the slider 2a. In a case where it is judged that the user has made the operation on one point of the slider 2a, it is judged that the sliding operation (the first operating manner) has been made to branch to step S13. In a case where it is judged that the user has made the operation on two points of the slider 2a, it is judged that the pinching operation (the second operating manner) has been made to branch to step S11.

In step S11, changes in the distance between the two operated points are detected. In accordance with the results detected in step S11, that is, in accordance with the direction in which the distance between the two points has changed, the speed at which the distance between the two points has changed, and the amount by which the distance between the two points has changed, an instruction to zoom in or out the DAW screen 30 with the position of the location bar 31 being centered is transmitted to the PC 1 through the communication I/F 23 in step S12. More specifically, in a case of the pinching-out operation in which the user opens two fingers, it is detected that the distance between the two points has widened. By this detection, an instruction to zoom in the range C of the DAW screen 20 in the lateral direction is transmitted to the PC 1. In a case of the pinching-in operation in which the user closes the two fingers, it is detected that the distance between the two points has reduced. By this detection, an instruction to zoom out the range C of the DAW screen 30 in the lateral direction is transmitted to the PC 1. In response to the instruction corresponding to the direction in which the distance between the two points has changed, the speed of the change and the amount of the change, the PC 1 zooms in/out, in accordance with the instruction, the range C of the DAW screen 30 in the lateral direction with the position of the location bar 31 being centered, and then displays the zoomed in/out range C. More specifically, the area shown in the range C of the DAW screen 30 is zoomed in or out in accordance with the direction in which the distance between the two points has changed, while the area shown in the range C changes at the speed which corresponds to the speed at which the distance between the two points has changed. Finally, the width of the area which is to be shown in the range C is determined in accordance with the amount by which the distance between the two points has changed.

As a result, irrespective of the function currently assigned to the slider 2a and of whether the mode switch SW2c has been operated or not, the area shown in the range C of the DAW screen 30 is zoomed in (when the two fingers are opened) or zoomed out (when the two fingers are closed) in the lateral direction. In the case where it is judged that the slider 2a has been operated on two points of the slider 2a, the zoom is controlled depending on whether the distance of the two points is narrowed or widened. In a case where the distance between the two points has not changed (e.g., in a case where the two fingers have moved in parallel), therefore, the zoom function will not operate. In a case where three or more points have been touched, only the earlier touched two points are recognized, but the third and later points will be ignored. In the case where it is judged that the slider 2a has been operated on two points (in the case of the pinching operation with two fingers), the illumination of the LEDs 2b will not be changed by the user's operation.

In step S13 branched when it is judged that the slider 2a has been operated on one point of the slider 2a, it is judged whether the user has operated the slider 2a while depressing the mode switch SW2c or the user has operated only the slider 2a. In a case where it is judged that the user has operated only the slider 2a without depressing the mode switch SW2c, the process proceeds to step S14 to check the function currently assigned to the slider 2a. Assume that the currently assigned function is the locating function of moving the location bar 31.

In this case, step S15 detects the direction, speed and amount by which the slider 2a has operated. In step S16, an instruction to move the location bar 31 in accordance with the direction, speed and amount of the operated slider 2a detected in step S15 is transmitted to the PC 1 through the communication I/F 23. The PC 1 then moves the location bar 31 on the DAW screen 30 in accordance with the received instruction indicative of the content of the operation of the slider 2a. In a case where the slider 2a is assigned a function which is different from the locating function of moving the location bar 31, step S16 performs processing which corresponds to the function assigned to the slider 2a. In step S17, the illumination of the LEDs 2b is controlled in accordance with the function currently assigned to the slider 2a and the state of the DAW 1 a.

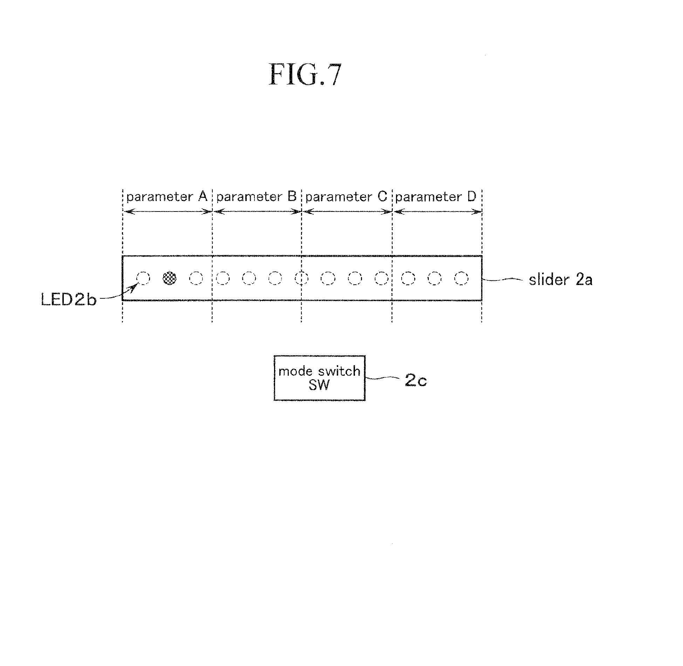

In a case where it is judged in step S13 that the user has operated the slider 2a while depressing the mode switch SW2c, the process proceeds to step S18 to switch the function assigned to the slider 2a in accordance with the position at which the user has depressed the slider 2a with a user's finger and released the finger from the slider 2a. The content specified by this user's operation is stored in the RAM 22 to enable the setting when the slider 2a is operated in the first operating manner next time. In accordance with the function assigned in step S18, furthermore, one of the LEDs 2b embedded in the slider 2a blinks in step S19. In a case where the slider 2a is assigned a function "A", for example, the LED 2b situated roughly in the center of an area "A" shown in FIG. 7 blinks. After step S12, step S17 or step S19, the slider operation process terminates.

Next, an example of functions which can be assigned to the slider 2a will be explained. In this example, the slider 2a has four assignable functions, function A, function B, function C and function D so that the user can switch among the four functions. These four functions A, B, C and D are to be performed by user's operation of an operating portion (the slider 2a) of the present invention in the first operating manner (the sliding operation).

By the function A which is the locating function, the location bar 31 (reproduction position) displayed on the DAW screen 30 is moved to the right or left in accordance with the direction, speed and amount of the sliding operation of the slider 2a. While the location bar 31 is moved, song data will not be reproduced. If the location bar 31 is moved during reproduction of a song, the reproduction is suspended during the move, but is resumed after the move. The amount by which the slider 2a is operated and the amount by which the location bar moves on the screen are constant irrespective of the zoom rate of the screen. More specifically, user's operation of the slider 2a from the left end to the right end results in the move of the location bar from the left to the right by an amount which is 1.5 times of the width of the screen. In a case where the screen displays only one measure, for example, one sliding operation can move the location bar over only 1.5 measures at the maximum. In a case where the screen displays 20 measures, however, one sliding operation can move the location bar over 30 measures. In other words, by moving the location bar 31 in a state where the screen is zoomed out, the user can quickly transfer the location bar 31 to the top or end of a song.

In a case where the slider 2a is assigned the locating function, the LEDs 2b ranging from the leftmost LED to the LED corresponding to the position of the location bar 31 with respect to the entire song are tuned on. Therefore, when the location bar moves by user's sliding operation of the slider or by reproduction of the song, the number of the illuminating LEDs varies.

The function B is a jog function, by which a jog wheel provided on the DAW rotates in accordance with the direction and the amount by which the slider 2a is slid. According to the angle of the rotation of the jog wheel, song data is slowly reproduced at between 0-speed (reproduction suspended) and single-speed (constant speed), so that the location bar 31 moves in accordance with the reproduction position. The right rotation results in forward reproduction, while the left rotation results in reverse reproduction. The reproduction speed increases with an increase in rotation angle. Once the reproduction speed reaches the constant speed, however, the reproduction speed will not change even if the jog wheel is rotated further. By sliding the slider 2a from the left end to the right end, the jog wheel rotates 180° to the right.

In order to indicate the rotation angle of the jog wheel provided on the DAW, furthermore, the LEDs 2b corresponding to the position are turned on. More specifically, the rotation angles between 0 and -180° correspond to the LEDs 2b of the left half, while the rotation angles between 0 and 180° correspond to the LEDs 2b of the right half. When the illuminating LEDs 2b reach the right end, the illumination returns to the left end. The illumination of the LEDs 2b will not be affected by the zoom rate of the screen. According to the speed at which the slider 2a is slid, in addition, the rotation speed of the jog wheel provided on the DAW varies.

The function C is a shuttle function, by which a shuttle wheel provided on the DAW rotates in accordance with the direction and the amount by which the slider 2a is slid. The shuttle wheel can rotate to the right and left within a range from 0 to 135°, respectively. According to the angle of the rotation, song data is quickly reproduced at between 0-speed (reproduction suspended) and quadruple-speed, while the location bar 31 moves in accordance with the reproduction position. The right rotation results in forward reproduction, while the left rotation results in reverse reproduction. The reproduction speed increases with an increase in rotation angle. By sliding the slider 2a only by half the width of the slider 2a (e.g., from the center to the right end), the shuttle wheel rotates 135°. Even if the slider 2a is slid further such as being slid from the left end to the right end, the shuttle wheel only rotates 135°.

Furthermore, the number of the LEDs 2b corresponding to the rotated amount of the shuttle wheel are turned on in order to indicate the rotation angle of the shuttle wheel provided on the DAW. With the LED situated at the center being defined as the starting point, more specifically, the LEDs 2b ranging from the starting point to the position corresponding to the operated amount are turned on. The rotation angles from 0 to 135° correspond to the LEDs 2b of the right half, while the rotation angles from 0 and -135° correspond to the LEDs 2b of the left half. The starting point of the sliding operation is not necessarily the center of the slider 2a. Even if the slider 2a is operated at any position, the LEDs 2b ranging from the center are turned on. When the user releases a user's finger from the slider 2a, the shuttle wheel returns to the center, so that only the LED situated at the center is lighted. The illumination of the LEDs 2b will not be affected by the zoom rate of the screen. According to the speed at which the slider 2a is slid, in addition, the rotation speed of the shuttle wheel provided on the DAW varies.

The function D is a scrolling function, by which the screen is scrolled in the time axis direction in accordance with the direction, the speed and the amount of the sliding operation of the slider 2a. The location bar 31 will not move, nor will the reproduction speed change. Because the amount of operation of the slider 2a and the scrolled amount displayed on the screen are constant irrespective of the zoom rate of the screen, the user can quickly move to the top or end of a song by scrolling in a state where the screen is zoomed out. Furthermore, the LEDs 2b are turned on in accordance with the current size and position of a scroll bar with respect to the width of the DAW screen.

As indicated in FIG. 7, the area of the slider 2a is divided into four areas which is the same number as the number of assignable functions: area A, area B, area C and area D. By touching (depressing operation) the area A while depressing (touching) the mode switch SW 2c, the user can assign function A to the slider 2a. Similarly, by touching the area B, the area C or the area D while depressing the mode switch SW2c, the user can assign the function B, the function C or the function D to the slider 2a. By user's touch on any one of the areas A to D while depressing the mode switch SW2c, as described above, the function assigned to the slider 2a can be switched to the function corresponding to the touched area. During the depression of the mode switch SW2c, the LED 2b which is situated roughly in the middle of the area A, B, C or D which corresponds to the function currently assigned to the slider 2a blinks. By depressing the mode switch SW2c, therefore, the user can recognize the function currently assigned to the slider 2a.

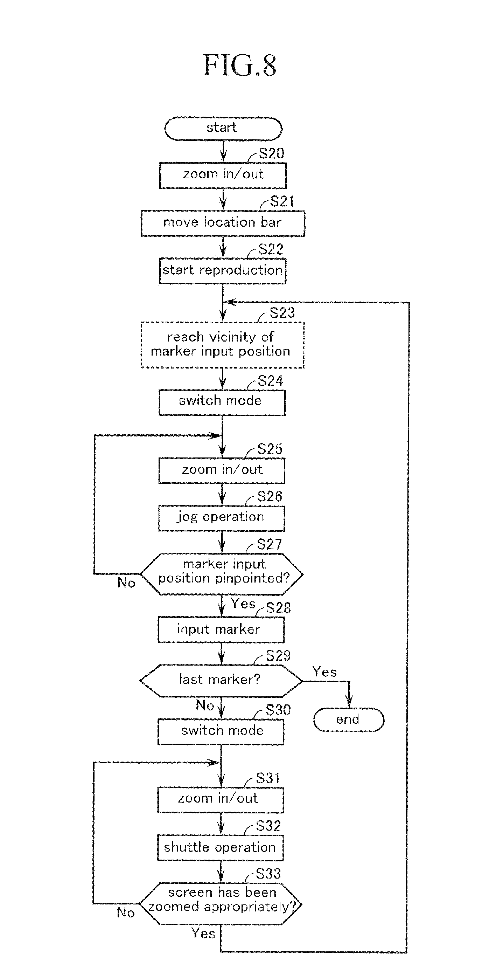

Next, the operation of inputting markers to song data will be explained as the embodiment of the controller 2 of the present invention. A flowchart of the operation of inputting markers is indicated in FIG. 8. The marker is a function of marking a certain position of a song so that the song can be readily reproduced starting at the marked position. In a case where the song data is formed of sections: "intro" "first melody (A-melody)", "second melody (B-melody)", "chorus", "interlude", and "ending", markers input at breakpoints between the respective sections will be helpful for the user. When the user performs the operation of inputting markers, the user can input markers at the above-described breakpoints.

A marker is to be input to the current position of the location bar 31 by user's depression of the switch SW1 of the controller 2. More specifically, inputting of a marker is done as follows: First, the user moves the location bar 31 to the vicinity of a position at which the user wishes to input a marker. Then, the user further moves the location bar 31 to the exact position at which the user wishes to input a marker while looking at waveforms or slowly reproducing the song data to listen to tones of the song. Then, the user is to depress the switch SW1 to input a marker. For inputting of a marker, therefore, the user checks whether the slider 2a is assigned the locating function, and performs the pinching operation on the slider 2a to zoom in or out the area of the range C of the DAW screen 30 in the lateral direction so that the user will readily move the location bar 31 to the position at which the user wishes to input a marker (step S20). In a case where the A-melody follows the intro of 8 measures, for example, because the user will be able to quickly move the location bar 31 to the start position of the A-melody which is the position at which the first marker is expected to be input by moving the location bar 31 to the vicinity of the sixth measure and starting reproduction of the song, it is preferable to zoom in or out to have a zoom rate at which the user can move the location bar to the sixth measure only by one sliding operation. Then, by performing the sliding operation on the slider 2a, the user moves the location bar to the vicinity of the position at which the user wishes to input the marker (step S21).

By depression of the switch SW11 of the controller 2, the song is reproduced starting at the position of the location bar 31 set in step S21 (step S22). Then, the user advances the reproduction of the song to approach the position at which the user wishes to input the marker (step S23). Then, the user touches the area B of the slider 2a while depressing the mode switch SW2c to switch the function assigned to the slider 2a to the jog function (step S24). Then, the user carries out steps S25 to S27 to slowly move the location bar 31 which has reached the vicinity of the intended position back and forth at the vicinity of the intended position by performing the sliding operation on the slider 2a having the jog function to pinpoint the position at which the marker should be input.

In step S25, because the user is to determine the position at which the marker is to be input while looking at musical waveforms displayed on the DAW screen 30, the user performs the pinch-out operation in which the user opens two fingers on the slider 2a to zoom in the displayed musical waveforms. In step S26, the user slowly reproduces the song by performing the sliding operation on the slider 2a having the jog function while looking at the zoomed-in musical waveforms to determine the most appropriate marker position, judging from both the reproduced tones and the displayed musical waveforms. By defining, as a breakpoint, a point which is not only a break which sounds appropriate but also whose musical waveforms have the smallest amplitude, the user can define a breakpoint which is exact in musical aspect as a marker position. In step S27, it is judged whether a marker input position has been pinpointed or not. Because the user is to gradually increase the zoom rate of the displayed musical waveforms to narrow the range in which the user tries to find the point, the steps S25 to S27 will be carried out repetitively.

When the user has pinpointed the marker position, the user performs the operation of inputting a marker. In this operation, more specifically, the user depresses the switch SW1 of the controller 2 to input a marker at the current position of the location bar 31 (step S28). Default marker names at the time of input of markers are "marker 1 ", "marker 2", ... in the order of input of markers. Then, it is judged whether the marker input in step S28 is the last marker or not (step S29). If it is judged that the input marker is the last one, the input of markers terminates. If it is judged that the input marker is not the last one, the flow proceeds to step S30 in order to input the next marker. In step S30, by touching the area C of the slider 2a while depressing the mode switch SW2c, the user switches the function assigned to the slider 2a to the shuttle function.

Next, in steps S31 to S33, the operation of moving the location bar 31 to the vicinity of a position at which the next marker is to be input is performed. Although the user wishes to move the location bar 31 to the next marker position which is several measures away from the current position, the musical waveforms have been considerably zoomed in by the zoom in/out operation carried out in step S25. Therefore, it is necessary to zoom out the screen on which the location bar 31 is displayed. In addition, because the feel of the song can be different in the next marker input position (e.g., "B-melody"), it is efficient for the user to quickly move the location bar 31 while listening to the reproduced song.

In step S31, more specifically, the user performs the pinch-in operation in which the user closes user's two fingers on the slider 2a to zoom out the area of the range C in the lateral direction on the DAW screen 30. The area of the range C is expected to be zoomed out at a zoom-out rate which is an extent that will allow the user to take a bird's eye view on the song data to recognize the next input position. However, because the user does not know the "next marker input position" yet, it is desirable to zoom out the area of the range C to the extent that will display several measures. In step S32, by performing the sliding operation on the slider 2a having the shuttle function, the user moves the location bar 31 to the vicinity of the intended position while quickly reproducing the song data. If it is judged that the screen should be further zoomed in or out (step S33), the flow returns to step S31 to zoom in or out to have an appropriate zoom rate to perform the shuttle operation in step S32 to move the location bar 31 to the vicinity of the next marker input position.

Then, the flow returns to step S23 to repeat steps S24 to S33 until it is judged in step S29 that the input marker is the last marker. As described above, the user can input markers at certain positions of song data, so that the user can reproduce the song data starting at a selected marker position.

Because the above-described step S20, steps S24 to S26, and steps S30 to S32 are the sliding operation or the pinching operation performed on the slider 2a and do not require the user to release the user's hand from the slider 2a, the user can perform these operations without the need for looking down at the user's hand. Therefore, the user can perform necessary editing operation, keeping the user's eyes on the DAW screen 30. In steps S25 to S26, and steps S31 to S32, particularly, because it is necessary for the user to repeatedly perform the zoom-in/out operation and the operation of moving the location bar 31 until the location bar reaches an intended position, the controller 2 of the present invention enhances efficiencies by allowing the user to focus on listening to sounds of the song and watching musical waveforms displayed on the screen without being required to release the user's hand and eyes. As described above, although the user is required to frequently repeat the zoom-in/out operation and the operation of moving the location bar 31 in conjunction with slow-reproduction and quick reproduction during the editing of song data by use of the controller 2, the controller 2 allows the user to perform these operations by the sliding operation and the pinching operation on the slider 2a. Therefore, the user can edit song data efficiently, keeping the user's eyes on musical waveforms displayed on the screen without looking down at the user's hand.

The controller according to the present invention which carries out the parameter controlling method of the present invention has been explained as above. Although the slider of the controller of the present invention is formed of a touch pad, the slider is not limited to the above-described slider, but can be a physical slider, a knob, buttons or the like. For example, buttons [<], [>] for moving the location bar can be employed so that the user can zoom in/out the screen by depressing two buttons at the same time or depressing the buttons for a long period of time, or by using the two buttons in combination with other buttons.

As for the zoom of the screen by use of the controller of the invention, the screen may be zoomed in/out in the vertical direction, not in the lateral direction (in the time axis direction), or may be zoomed in/out both in the lateral and vertical directions.

Furthermore, the functions which can be assigned to the slider of the controller of the invention may include functions which are nothing to do with the move of the location bar. More specifically, the functions can include any functions as long as those functions correspond to functions of the DAW such as a function of changing volume and pan, a function of changing tempo, and a tap tempo function (changing tempo by tapping on the slider).

## Claims

1. A parameter controlling apparatus having an operating portion adapted to control a reproduction state of song data displayed on a display portion for displaying a track into which the song data has been input, the parameter controlling apparatus comprising:
judging means for judging whether the operating portion has been operated in a first manner or in a second manner;
first instructing means for generating, when it is judged by the judging means that the operating portion has been operated in the first manner, an instruction to change a parameter which is to be controlled and relates to reproduction of the song data in accordance with the operation of the operating portion; and
second instructing means for generating, when it is judged by the judging means that the operating portion has been operated in the second manner, an instruction to zoom in or out and display the track displayed on the display portion.

2. The parameter controlling apparatus according to claim 1, wherein
the song data is at least one of musical performance data and musical waveform data.

3. The parameter controlling apparatus according to claim 1 or 2, wherein
the operation in the first manner is sliding operation.

4. The parameter controlling apparatus according to claim 3, wherein
the first instructing means generates an instruction relating to a direction in which the parameter changes and an amount by which the parameter changes in accordance with a direction in which the sliding operation is performed and an amount by which the sliding operation is performed.

5. The parameter controlling apparatus according to claim 4, wherein
the first instructing means further generates an instruction relating to speed at which the parameter changes in accordance with a speed at which the sliding operation is performed.

6. The parameter controlling apparatus according to any of claims 1 to 5, wherein
on the display portion, a reproduction position of the song data is also displayed;
the reproduction position of the song data can be controlled by the operation of the operating portion in the first manner; and
the first instructing means generates an instruction to change the parameter relating to the reproduction position of the song data in accordance with the operation of the operating portion.

7. The parameter controlling apparatus according to any of claims 1 to 5, wherein
a direction in which the song data is reproduced and a speed at which the song data is reproduced can be controlled by the operation of the operating portion in the first manner; and
the first instructing means generates an instruction to change the parameter relating to the direction in which the song data is reproduced and the speed at which the song data is reproduced in accordance with the operation of the operating portion.

8. The parameter controlling apparatus according to any of claims 1 to 5, wherein
scrolling on the display portion can be controlled by the operation of the operating portion in the first manner; and
the first instructing means generates an instruction to change the parameter relating to the scrolling on the display portion in accordance with the operation of the operating portion.

9. The parameter controlling apparatus according to any of claims 1 to 5, the parameter controlling apparatus further comprising:
a mode switch for setting, as items to be controlled by the operation of the operating portion in the first manner, at least two of reproduction position of the song data, quick reproduction of the song data, slow reproduction of the song data and scrolling on the display portion; and
target operation item determining means for determining, when the mode switch and the operating portion are touched at the same time, a target item which is to be controlled by the operation of the operating portion in the first manner in accordance with a touched position of the operating portion, wherein
the first instructing means generates an instruction to change, in accordance with the operation of the operating portion in the first manner, the determined parameter which is to be controlled.

10. The parameter controlling apparatus according to any of claims 1 to 9, wherein
the operation in the second manner is pinching operation.

11. The parameter controlling apparatus according to claim 10, wherein
the second instructing means generates an instruction relating to zoom in or out of the track displayed on the display portion in accordance with a direction in which the pinching operation is performed on the operating portion, a speed at which the pinching operation is performed on the operating portion, and an amount by which the pinching operation is performed on the operating portion.

12. The parameter controlling apparatus according to any of claims 1 to 10, wherein
on the display portion, a reproduction position of the song data is also displayed; and
the second instructing means generates an instruction to zoom in or out and display the track with the reproduction position displayed on the display portion being centered.

13. A method for controlling a parameter, the method being applied to a parameter controlling apparatus having an operating portion adapted to control a reproduction state of song data displayed on a display portion for displaying a track into which the song data has been input, the method comprising the steps of:
a judging step of judging whether the operating portion has been operated in a first manner or in a second manner;
a first instructing step of generating, when it is judged by the judging step that the operating portion has been operated in the first manner, an instruction to change a parameter which is to be controlled and relates to reproduction of the song data in accordance with the operation of the operating portion; and
a second instructing step of generating, when it is judged by the judging step that the operating portion has been operated in the second manner, an instruction to zoom in or out and display the track displayed on the display portion.

14. A parameter controlling program executed by a computer and applied to a parameter controlling apparatus having an operating portion adapted to control a reproduction state of song data displayed on a display portion for displaying a track into which the song data has been input, the computer program comprising the steps of:
a judging step of judging whether the operating portion has been operated in a first manner or in a second manner;
a first instructing step of generating, when it is judged by the judging step that the operating portion has been operated in the first manner, an instruction to change a parameter which is to be controlled and relates to reproduction of the song data in accordance with the operation of the operating portion; and
a second instructing step of generating, when it is judged by the judging step that the operating portion has been operated in the second manner, an instruction to zoom in or out and display the track displayed on the display portion.
